Europäisches Patentamt

European Patent Office

Office européen des brevets

(11) Publication number: **0 462 694 A2**

# EUROPEAN PATENT APPLICATION

(21) Application number: 91303695.0

(51) Int. Cl.5: **H02H 9/04**

(22) Date of filing: 24.04.91

(30) Priority: 21.06.90 US 541581

(43) Date of publication of application:
27.12.91 Bulletin 91/52

(84) Designated Contracting States:
AT BE CH DE DK ES FR GB GR IT LI LU NL SE

(71) Applicant: **ELECTRIC POWER RESEARCH INSTITUTE, INC**
**3412 Hillview Avenue**
**Palo Alto California 94303(US)**

(72) Inventor: **Tahiliani, Vasu H.**
**1598 Dorcey Lane**
**San Jose, California 95120(US)**

(74) Representative: **Cross, Rupert Edward Blount et al**
**BOULT, WADE & TENNANT 27 Furnival Street London EC4A 1PQ(GB)**

(54) **Protective device for temporary system overvoltages.**

(57) An apparatus and method for a power overvoltage protection system for limiting sudden transition line overvoltages. The apparatus and method include a voltage divider having a first varistor block and a second varistor block electrically connected in series. The first block and the second block each having a plurality of varistors. The first block exists in a nonconductive mode during normal operation of the power system. A thyristor circuit having a voltage sensor and a pair of oppositely coupled thyristors, is electrically connected between the first and second blocks and ground. The voltage sensor continuously senses line voltage $V_o$, and a trigger mechanism continuously compares the sensed voltage $V_o$ with a predetermined critical voltage of magnitude $V_p$ to form a ratio. When the voltage $V_o$ exceeds a predetermined threshold value of approximately 1.1 or 1.2 PU, the thyristor is activated into a conductive mode so that the line voltage $V_o$ is entirely absorbed by the first block of the remaining voltage $V_o$ through the oppositely coupled thyristor pair to ground. The thyristor is reset into non-conductive mode when the $V_o/V_p$ ratio falls below the predetermined value.

FIG.—1

The present invention relates generally to energy absorption devices such as high voltage surge arresters capable of limiting voltages, and more particularly to a surge arrester apparatus and method capable of absorbing high energy dosages resulting from temporary system overvoltages ranging in duration up to a few seconds.

Temporary system overvoltages may occur as a result of a variety of conditions. For example, a ground fault produces an undamped overvoltage on the unfaulted phases, of a 3-phase high voltage transmission system which must be removed through appropriate switching action. If the voltage is high enough, this may cause saturation in transformers, causing harmonics. A sudden load change (load rejection in the worst case) may cause a voltage rise at the generator which, when combined with Ferranti effect, causes an increase on the line voltage; Ferroresonance in cable connected transformers; dynamic overvoltages on the ac side caused by blocking action at an HVDC converter station, and the like. It is highly desirable that effective means be provided to protect electrical insulation systems against temporary overvoltages ranging in a time duration up to several seconds.

Surge arresters are generally known in the art which satisfactorily protect electrical power systems from transient overvoltages ranging in duration from a few microseconds to a few milliseconds. Conventional prior art surge arresters, however, are incapable of limiting the overvoltages to the levels of 1.1 to 1.2 per unit; also they are incapable of absorbing the prolonged high energy dosages resulting from temporary overvoltages of up to several seconds. For example, surge arresters utilizing silicon carbide materials are known, but they are generally limited in their capabilities due to the relatively low degree of non-linearity in their volt-ampere (V-I) characteristics. Series gaps were introduced to compensate for the low degree of non-linearity, but the introduction of series gaps increases the sparkover voltage reducing surge voltage protection, complicates assembly, increases cost, and reduces reliability. U.S. Patent 3,660,719, for example, teaches a spark gap in series with a current limiting resistor. In general, however, the power gap is a weak link in these types of surge arresters, since it is prone to inadvertent sparkover from external pollution or electrode erosion. Also, the range of sparkover voltages can be large and can change with time as the gaps age as electrodes erode.

Various types of voltage regulators employing shunts are known in the art for obtaining a constant voltage from an electric circuit subject to voltage fluctuations. U.S. Patent 1,850,507 teaches a current by-pass for obtaining a constant voltage from a circuit subject to voltage fluctuations for protection against overvoltages. U.S. Patent 3,551,745 discloses a silicon control rectifier (SCR) connected across the shunt regulator and a load to short the regulator output when the regulator output voltage exceeds a nominal level.

Many solid-state circuitry arrangements have been proposed for protection against transient overvoltages. U.S. Patent 4,322,767 teaches bi-directional solid-state circuitry using gated diode switches. The circuitry includes zenor diodes, resistors, capacitors and gated diodes arranged to perform a voltage overload protection function independent of the polarity of the overload and independent of which of the terminals experiences the overload. U.S. Patent 4,297,739 teaches a circuit for preventing overvoltages in the exciting winding of a synchronous machine. U.S. Patent 4,321,644 teaches a power line transient limiter for providing overvoltage protection in commercial airplanes. The transient limiter includes a relatively complex arrangement of current-steering diodes, current-limiting resistors, capacitors to reduce the rate of voltage rise, and the like.

U.S. Patent 3,375,405 discloses a circuit capable of momentarily shunting voltage surges from the line by connecting a negative current-resistor in series with a pair of gate-controlled rectifiers. This surge protection device requires an inductor coil to limit the rate of current buildup, which is not an effective way of limiting steep wave voltage fronts routinely encountered on a power system.

Metal-oxide non-linear resistors, and particularly zinc-oxide based ceramics have been developed for use in surge arrester applications. Due to the relatively high degree of non-linearity in the V-I characteristic of zinc-oxide based materials, they can be applied without any series gaps and thus provide improved surge protection and reliability. The development and application of zinc-oxide based materials for use in surge arresters for overvoltage protection is described in "Development of a New Type of Nonlinear Resistance Valve Block for Surge Arresters", Electric Power Research Institute Final Report EPRI EL-1647, Project 425-1, December, 1980.

Recent developments and applications of zinc oxide gapless arresters permits clamping of overvoltages to levels well below those achieved with silicon carbide arresters and series gap arresters. Gapless surge arrester poles utilizing zinc oxide based ceramic materials have been assembled and tested for 550 kV and 1200 kV systems. One complete 550 kV pole was designed as an assembly of three porcelain units attached in a single column, complete with grading and corona rings. Based on the maximum line to ground voltage of 318 kV, each porcelain unit was rated at 106 kV maximum continuous operating voltage. For the 1200 kV system, maximum continuous operating line to ground voltage is 693 kV RMS, and, with five longer porcelain units in series, each unit for the 1200 kV arrester was rated 140 kV RMS. The 1200 kV arrester pole was designed with two parallel stacks of 5 units in series. A third porcelain (empty) was added at the lower two levels to form a tripod for mechanical stability. All discs in each unit were selected to have the same grading current at steady state voltage, and so that the sum of disc voltage at 17 kA did not exceed the protective level. The discs in one unit were stacked in subassemblies, sealed to keep out the thermal sand, and enclosed in a porcelain housing (U.S. Patent No. 4,223,366). Development, design and testing of the gapless surge arrester poles described about is set forth in "Gapless Surge Arresters for Power Systems Applications", Electric Power Research Institute Final Report, EPRI EL-3136, Volume 1, Project 657-1, 1983.

Despite the high degree of non-linearity exhibited by zinc oxide varistors, the full benefit of this non-linearity cannot be realized utilizing the typical gapless arrester design described above. Gapless arresters are conventionally designed to operate at a line voltage $V_0$ which is approximately 80 to 85% of the critical crossover voltage $V_c$. Present gapless arresters clamp line voltage excursions at a protective level (hereinafter PL) of 1.5. Protecting a system to 1.5 PL against transient overvoltages having a duration of several microseconds to several milliseconds is satisfactory for many surge arrester applications. It is desirable however to protect a power system from temporary overvoltages having a duration on the order of up to several seconds and a PL in the range of 1.1 to 1.2.

Accordingly, it is a primary objective of the present invention to provide a protective device for temporary system overvoltages.

An object of an embodiment of the present invention is to provide such a device which is capable of absorbing high energy dosages ranging in duration from one cycle several cycles and up to a time duration of several seconds.

Another objective of an embodiment is to meet the thermal energy requirements of a high voltage transmission system at a protective level of about 1.1 to 1.2 per unit of maximum line to ground voltage.

In accordance with the present invention, there is provided a surge arrester for grounding temporary overvoltages in a power system. The apparatus and method include a voltage divider having a first varistor block and a second varistor block electrically connected in series. The first block and the second block each include a plurality of varistors. The first block and second block each exist in an essentially nonconductive mode under normal voltage operation of the power system.

A thyristor circuit, having a voltage sensor and a trigger responsive to the sensor are electrically connected between the first and second blocks. The voltage sensor continuously senses line voltage $V_0$, and compares the sensed voltage $V_0$ with a predetermined protection voltage of magnitude $V_p$. When the $V_0$ reaches a predetermined threshold value the thyristors are switched on shorting out the second set of blocks, thus increasing the voltage across the first set of blocks. This voltage exceeds $V_c$ and current conduction and energy absorption starts.

In a preferred embodiment the thyristor circuit further comprises a pair of oppositely coupled thyristors electrically connected in parallel with respect to each other. The thyristor pair is connected between the output of the first block and ground.

In a preferred embodiment the predetermined threshold value is approximately 1.1 or 1.2 PU.

The second group of varistors do not perform any varistor function other than acting as a voltage divider defining the portion of the line voltage surge absorbed by the first varistor block. In a second embodiment according to the invention, a low cost capacitor with substantially identical impedance characteristics is substituted for the second block.

Examples of embodiments of the present invention will now be described with reference to the drawings, in which:-

FIG 1 is a schematic diagram of the surge arrester showing the first varistor block and the second varistor block connected in series according to an embodiment of the present inventions;

FIG 2 is a graph illustrating the voltage-ampere characteristics of the surge arrester according to an embodiment of the present invention; and

FIG 3 is a diagram of the surge arrester showing a first varistor block connected in series with a capacitor according to another embodiment of the invention.

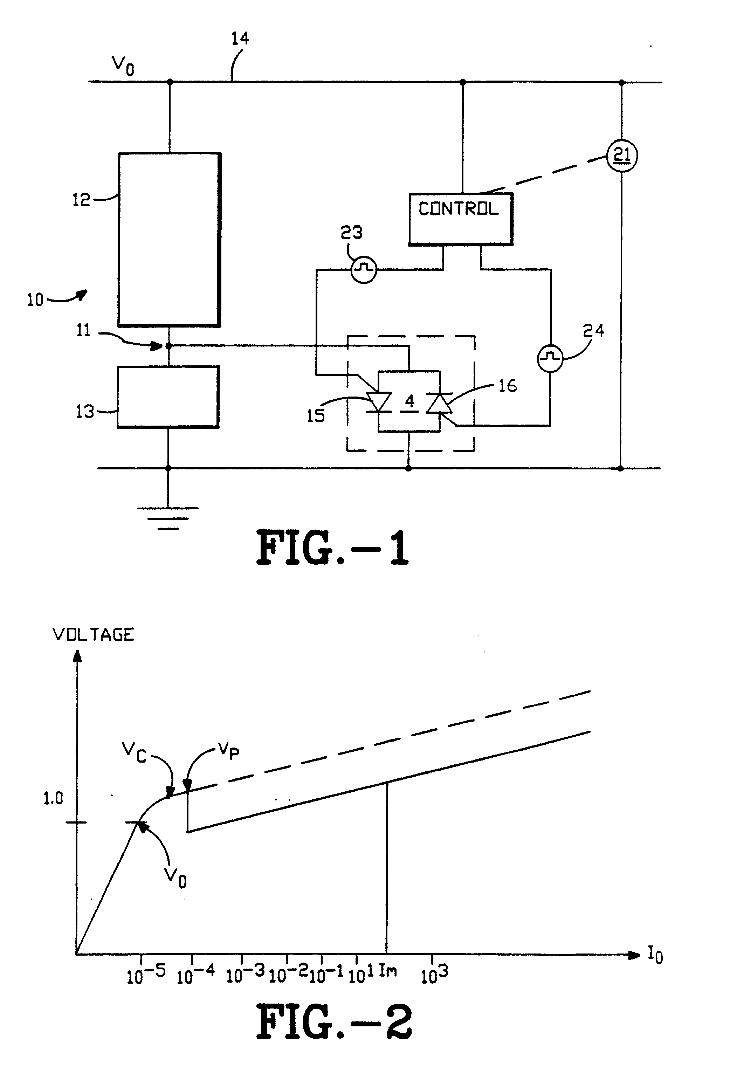

Referring now to the drawings, and in particular FIG 1, there is shown a protective surge arrester device 10 incorporating the principles of the present invention. A voltage divider comprising a first varistor block 12 and a second varistor block 13 are connected in series between line voltage $V_0$ 14 and ground. A pair of oppositely coupled thyristors 15 and 16 are electrically connected in parallel with respect to each other. The thyristor pair 15 and 16 is connected between the output of the first block and ground.

It will be appreciated that in order to increase surge arrester performance, the first varistor block 12 and the second varistor block 13 should maintain high impedance characteristics during nonconductive mode, and high energy absorbing characteristics during conductive mode. By way of example, in the embodiment chosen for the purpose of illustration, the varistor blocks should include a metal oxide varistor type, with zinc oxide as a major component. Among other possible metal oxide constituents include, but are not limited to: $Bi_2O_3$, $Sb_2O_3$, $Co_3O_4$, $MnO_2$ $NiO$, $Cr_2O_3$, $Al_2O_3$, $Ga_2O_3$ and $ZrO_2$.

The varistor block 12 exists in two states; a non-conductive mode and a conductive mode. In non-conductive mode, the blocks 12 and 13 act as current insulators and permit only minimal current leakage through the blocks. In this mode, the blocks 12 and 13, connected in series at common terminal 11, act as a voltage divider. The voltage division ratio depends on capacitive impedance ratio between varistor block 12 and varistor block 13.

For any desired voltage application, the number of zinc-oxide varistor discs needed to sustain the voltage can be calculated. Typically, a varistor block 1cm tall will have a critical voltage ($V_c$) of 2 to 3 kV (kV - 1000V) e.g. for a 550kV three phase AC system, the line-to-ground peak voltage would be 450kV. So one can use 150 blocks each with a ($V_c$) rating of 3kV. But such a design will end up always operating at the threshold of conduction, going off from and back into conduction mode, jeopardizing the life of the arresters. A preferred approach is to add 20% additional blocks and have an arrestor with 180 blocks. This would keep the voltage across each block at 2.5kV which is approximately ≈83% of $V_c$. We call this $V_o$ (operating voltage) which assures that the arrestor does not go into conduction off and on during the normal mode of operation, but only goes into condition when the over-voltage exceeds 20% above the normal (3/2.5 = 1.2).

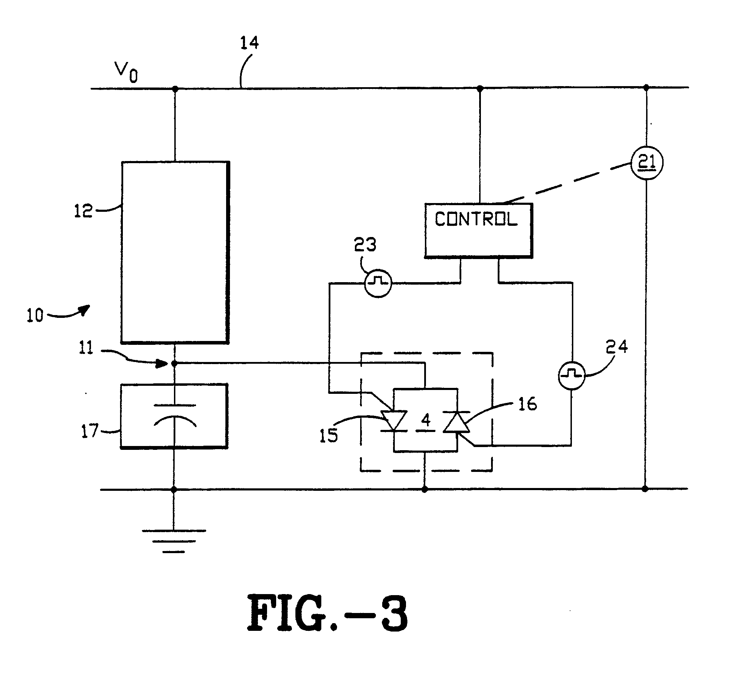

The characteristics of the zinc-oxide varistor blocks is such (FIG 2) that when the arrestor is conducting significant current ($I_L$), the corresponding voltage may be 30% above $V_c$. But since the arrestor operates at $V_o$, with reference to this protection level, the arrestor's ability to limit the voltage is at best 150%. This is unacceptable for some applications.

This brings about the need to switch out a few of the blocks at a critical time to provide improved protection. A back-to-back thyristor bridge 15, 16 (electrically the thyristors work similar to SCR's) is connected at the junction which is triggered by a voltage sensing device connected to line 14. Thyristor action essentially shorts out an appropriate segment 13 of zinc oxide blocks. For the example cited above, the device may short out segment 13 of 40 blocks, leaving only segment 12 of 140 blocks connected to line 14, thus putting each block of segment 12 at a voltage of (450kV/140 blocks) 3.21kV. This is above $V_c$ and the voltage drop corresponding to leakage current ($I_L$) (see FIG 2) is made closer to $V_o$, thereby making the device more effective.

FIG 1 shows a zinc oxide block stack electrically divided into two sectors or segments 12, 13. The junction 11 between segments 12 and 13 is where the thyristor bridge (4) is connected. This bridge is fired by device 23 or 24 which receives its voltage input from the firing control circuit 25. Since the voltage sensing is required for many other needs on the power system, this function may be available independent of this device and therefore, one can avoid the cost of introducing a voltage transformer for this device.

FIG 2 shows the electrical characteristics of typical zinc oxide materials. All zinc oxide varistors have a critical voltage ($V_c$) at which the device which has thus far been behaving essentially as an insulator to electrical current, suddenly turns into a conductor. As it carries more current, it has an increased voltage drop across it as indicated by the slope of the curve.

Normally, the device is operated at $V_o$ voltage and if the thyristor switching did not take place, the V/I characteristic would follow the dotted line. The switching of a thyristor eliminates a section of zinc oxide blocks (identified as segment 13) and increases the voltage appearing across each block of section or segment 12, and thereby improves the protection.

In the preferred embodiment, the voltage division ratio of sector 12 may range between about 60% to about 80% of the line voltage $V_o$ 14. By way of example, in order to optimize the surge arrester performance, the voltage dimension ratio of sector 12 is set at 80% and sector 13's voltage ratio is set at 20% according to one embodiment according to the invention. This is accomplished by adjusting the number of varistors in sector 12 and sector 13 so that sector 12's voltage drop across 12 is four times greater than across section 13. The voltage-ampere characteristics of the varistors of block 12 are hereinafter discussed in conjunction with FIG 2.

A thyristor bridge circuit 4 is electrically connected at the junction 11 of first varistor sector 12 and second varistor sector 13, the other end of bridge circuit 4 being connected to ground. The circuit for firing the thyristors 15, 16 incorporated in bridge 4 includes a voltage sensor 21 electrically connected to continuously sense line voltage $V_o$ 14; and a firing control circuit 25, electrically connected to the voltage sensor 21 and thyristor bridge 4 for tracking the sensed line voltage $V_o$ 14 for a predetermined protection voltage $V_p$. The firing control circuit 25 is responsive to the voltage $V_o$; that is, when a predetermined PC of approximately 1.1 or 1.2 is reached, the control circuit (25) will send the electrical firing pulses to fire thyristors 15 and 16.

The nature of the varistor blocks is such that the ratio between $V_1/V_2$ is always a constant as long as the thyristors are not conducting current. In effect, they become a voltage divider. If $V_2$ is monitored, (which is smaller and one end is grounded and, therefore, easy to monitor) $V_1$ and $V_o$ can be calculated. When $V_o$ goes up, $V_2$ goes up in the ratio. Therefore, when an increase in $V_2$ by a factor of 1.1 to 1.2 is seen, whichever is the set threshold, thyristors 13, 14 start conducting, bringing about the desired operation. This reduces the insulation ratings of the voltage measurement circuit and makes the invention more valuable.

During operation of the embodiment of the protective surge arrester 10, voltage sensor 21 constantly senses the line voltage $V_o$ 14 and is sensitive to voltage changes in fractions of micro-seconds responding to a $V_p = V_o(1.1$ to $1.2)$ to quickly trigger the thyristors into conduction.

Turning to FIG 2, the voltage-ampere characteristics of the varistor block 12 during conductive mode and non-conductive mode are illustrated. The protective level, or voltage limiting characteristic of varistor block 12 is determined primarily by the following parameters: (1) the normal line to ground operating voltage $V_o$; (2) the predetermined threshold voltage $V_p$ ($V_p$ is usually set at a voltage just above the normal line voltage $V_o$ 14) preferably $V_p = Vo(1.1$ to $1.2)$; (3) a line voltage surge $V_o$, created, for example; when lightning strikes the line or a variety of other circumstances; and (4) the non-linearity coefficient (ã) of the voltage-ampere characteristic curve of the varistor block 12. The current flow through the varistor section 12 is primarily a function of the energy levels being dissipated, which determines the current density flow.

The varistor blocks of each section display the following voltage-ampere characteristics during line operation. The current flow through the varistor block 12 is minimal a few milliamperes, and is limited to leakage current at normal voltage. The ampere curve of FIG 2 is substantially vertical for line voltages $V_o$ less than $V_c$.

When the Per Unit (PU) voltage exceeds the crossover voltage $V_c$, the varistor sector 12 becomes highly conductive and there is a tremendous increase in the current flow through the varistors. The volt-ampere curve of FIG 2 indicates that with small line voltage increments over $V_c$, the line current lo flow magnitude increases tremendously resulting in a substantially horizontal ampere curve.

The surge arrester 10 protects from temporary system overvoltages ranging in duration of up to a few seconds because of the line surge voltage dividing capabilities of the blocks 12 and 13 and the increased energy absorbing capabilities of varistor block 12. Effectively through the thyristor switching, a lower (improved) protective characteristic is achieved by setting the crossover voltage $V_p$ close to the normal operating line voltage $V_o$ 14, and yet long life of the device is ensured by exposing the varistor blocks to lower voltages under normal operation.

Referring now to FIG 3, a second embodiment of the present invention is shown. The second block 13 of FIG 1 is replaced by an equivalent capacity capacitor 17. Block 13 may be replaced by capacitor 17 because block 17 does not dissipate line voltage surges as does block 13. Accordingly, a capacitor with substantially the same impedance characteristics may be substituted for block 13.

Capacitor 17 provides a relatively inexpensive voltage dividing circuit for limiting the line voltage $V_o$ 14 dissipation across varistor block 12. With an impedance substantially equivalent to varistor block 13 in the preferred embodiment of FIG 1, 100% of the line voltage $V_o$ 14 is dissipated in the first varistor block during line surge voltage conditions.

It is believed that this invention is especially useful with high energy varistors capable of handling 1000 Joules/cc. Examples of varistor materials capable of handling such power requirements are disclosed in the following patent applications: Serial Nos. 07/452,265; 07/452,266; 07/452,267; and 07/452,270, all filed December 15, 1989. All these are incorporated herein by reference.

The present invention, however, is not intended to be limited solely to use with varistors made of such materials.

While the present invention has been described with reference to a few specific embodiments, the description is illustrative of the invention and is not to be construed as limiting the invention. Various modifications may occur to those skilled in the art without departing from the true spirit and scope of the invention as defined by the appended claims.

## Claims

1. A power system overvoltage protection system (OPS) for limiting sudden temporary overvoltages on a line in a power system comprising:

   a voltage divider comprising a first varistor block and a second varistor block electrically connected in series at a junction, said first and second blocks each comprising a plurality of varistors, said first block existing in an essentially nonconductive mode during normal operation of the power system;

   a thyristor circuit with associated triggering mechanism electrically connected to the junction between said first and second blocks and ground, and comprising a voltage sensor for continuously reading line voltage $V_o$ on said line to bypass said second block when the voltage exceeds a predetermined threshold value $V_p$, said overvoltage being absorbed in said first block now connected to ground through said thyristor circuit;

said thyristor circuit being reset into non-conductive mode when the voltage $V_o$ falls below said predetermined value voltage $V_p$.

2. The overvoltage protection system as set forth in Claim 1, wherein said first and second blocks each comprise a plurality of varistors connected in series, said first block and said second block connected in series.

3. The overvoltage protection system of Claim 1 or 2, wherein said varistors comprise a high energy capacity metal oxide material.

4. The overvoltage protection system of Claim 3, wherein said varistors are comprised 80% to 95% percent zinc oxide.

5. The overvoltage protection system of any preceding claim, wherein said triggering means generates an optical firing signal in response to said voltage $V_o$ is substantially larger than said predetermined value.

6. The overvoltage protection system of any preceding claim, wherein the shunting capability of said thyristor circuit ranges from about 40% to about 15% of the line voltage.

7. The overvoltage protection system of any preceding claim, wherein said voltage tracking sensor is capable of detecting line voltage $V_o$ changes in fractions of micro-seconds.

8. The overvoltage protection system of Claim 1, wherein said triggering means comprises optical light signal generator responsive to said voltage comparator and focused on said first block, said optical light signal adapted to trigger said thyristors into conductive mode.

9. The overvoltage protection system of any preceding claim, wherein said thyristor circuit further comprises a pair of oppositely coupled thyristors electrically connected in parallel, said first thyristor adapted for conducting the positive polarity components of the line current to ground, said second thyristor adapted for conducting the negative polarity components of the line current when said first block is in conductive mode.

10. The overvoltage protection system of Claim 8, wherein said triggering means generates a firing signal whenever the $V_o/V_p$ ratio is substantially larger than said predetermined value.

11. A power system overvoltage protection system for limiting sudden transition line surge voltages comprising:

a voltage divider comprising a varistor block and a capacitor electrically connected in series, said block comprising a plurality of varistors, said block existing in a nonconductive mode during normal operation of the power system;

a thyristor circuit with associated triggering mechanism electrically connected to the junction between said block and said capacitor and ground, and comprising a voltage sensor for continuously reading line voltage $V_o$ on said line, $V_o$ with a critical voltage of magnitude $V_p$ for activating said first block into a conductive mode when $V_p$ exceeds a predetermined threshold value, thereby said overvoltage is coupled through said block and said thyristor circuit to ground; and

said thyristor circuit being reset into non-conductive mode when the voltage $V_o$ ratio falls below said predetermined threshold value.

12. A method for limiting sudden power line overvoltages comprising the steps of:

reading continuously the line voltage $V_o$;

providing first and second series connected varistor block sections between said power line and ground, said blocks being in a non-conductive mode during normal operation of said power system;

comparing continuously $V_o$ with a critical threshold voltage of magnitude $V_p$;

generating a firing signal whenever a $V_o$ substantially exceeds a predetermined value $V_p$ to change the state of a thyristor circuit between a junction of said first and second blocks ground to short out said second varistor block, whereupon breakdown voltage of said first varistor block is exceeded, shunting voltage $V_o$ to ground; and

resetting said first and second blocks back to an insulating state when $V_o$ is substantially less than $V_p$.

FIG.-1

FIG.-2

FIG.-3